## Europäisches Patentamt

## European Patent Office

## Office européen des brevets

(11) Veröffentlichungsnummer: **0 178 571**
**B1**

(12) # EUROPÄISCHE PATENTSCHRIFT

(45) Veröffentlichungstag der Patentschrift:
24.05.89

(51) Int. Cl.⁴: **F 16 J 12/00**

(21) Anmeldenummer: **85112722.5**

(22) Anmeldetag: **08.10.85**

(54) **Doppelmantel für einen emaillierten Behälter.**

(30) Priorität: **13.10.84 DE 3437622**

(43) Veröffentlichungstag der Anmeldung:
**23.04.86 Patentblatt 86/17**

(45) Bekanntmachung des Hinweises auf die Patenterteilung:
**24.05.89 Patentblatt 89/21**

(84) Benannte Vertragsstaaten:
**CH DE FR GB IT LI NL**

(56) Entgegenhaltungen:
**US-A-3 425 582**

**DIN 28151, Juni 1982**

(73) Patentinhaber: **Pfaudler-Werke AG, Scheffelstrasse 55, D-6830 Schwetzingen (DE)**

(72) Erfinder: **Ebert, Klaus-Peter, Reilsheimer Weg 19, D-6901 Gaiberg (DE)**

(74) Vertreter: **Endlich, Fritz, Dipl.-Phys., Postfach 1326 Blumenstrasse 8, D-8034 Germering (DE)**

## Beschreibung

Die Erfindung betrifft einen Doppelmantel für einen emaillierten Behälter, bestehend aus einem oberen, entlang dem Aussenumfang des Behälters angeschweissten gewölbten Mantelkragen sowie dem mit seinem oberen Ende mit dem unteren Ende des oberen Mantelkragens verschweissten Doppelmantel.

Bekannte Doppelmantelbehälter dieser Art (DIN 28151, Juni 1982) weisen meistens einen im Zentrum des Bodens angeordneten Auslaufstutzen auf, der von dem unteren gewölbten Mantelkragen umgeben ist, so dass dessen freies Ende mit einer Öffnung am unteren Ende des Doppelmantels verschweisst werden kann. Der Doppelmantel wird nach Fertigstellung der Emaillierung mit dem unteren und dem oberen Mantelkragen verschweisst. Bevor das Verschweissen erfolgen kann, sind jedoch verhältnismässig aufwendige Arbeitsvorgänge erforderlich, um die obere Umrandung des Doppelmantels relativ zu der unteren Umrandung des oberen Mantelkragens anzupassen und auszurichten, bevor das Verschweissen erfolgen kann. Die Wurzel der Schweissnaht muss manuell gelegt werden, erst danach kann automatisch eine Zwischennaht aufgebracht werden, bevor die automatische Fertigstellung der Verschweissung mit verdecktem Lichtbogen erfolgt. Auch das Verschweissen ist deshalb entsprechend zeitraubend und teuer, weil ein Wurzelspalt zwischen den zu verschweissenden Endbereichen vorhanden ist. Eine weitere Schwierigkeit besteht darin, dass unter der Schweisswurzel kein Blechstreifen angeordnet werden darf, weil dadurch eine Spaltkorrosion beim Beheizen des Doppelmantels verursacht werden kann. Deshalb ist auch ein besonders hoher, mit beträchtlichen Herstellungskosten verbundener Arbeitsaufwand bei der Herstellung emaillierter Doppelmantelbehälter mit einem unteren Auslaufstutzen erforderlich, weil dann gleichzeitig eine Anpassung am oberen und am unteren Ende des Doppelmantels berücksichtigt werden muss.

Es ist deshalb Aufgabe der Erfindung, einen Doppelmantel für einen emaillierten Behälter derart auszubilden, dass eine einfache Anpassung und Verschweissung des Doppelmantels unter Beachtung üblicher Druckbehältervorschriften erfolgen kann.

Diese Aufgabe wird erfindungsgemäss durch den Gegenstand des Patentanspruchs 1 gelöst. In vorteilhafter Weiterbildung der Erfindung wird das untere Ende des unteren Mantelkragens zylindrisch ausgebildet und die Öffnung am unteren Ende des Doppelmantels wird im Bereich des zylindrisch ausgebildeten unteren Endes des unteren Mantelkragens mit diesem verschweisst. Deshalb kann auch bei einem Doppelmantelbehälter mit einem Auslaufstutzen in verhältnismässig einfacher Weise ein Verschweissen sowohl des oberen Endes als auch des unteren Endes des Doppelmantels erfolgen, weil für die Anordnung der Höhe des unteren Endes des anzuschweissenden Doppelmantels ausreichende Freiheit besteht.

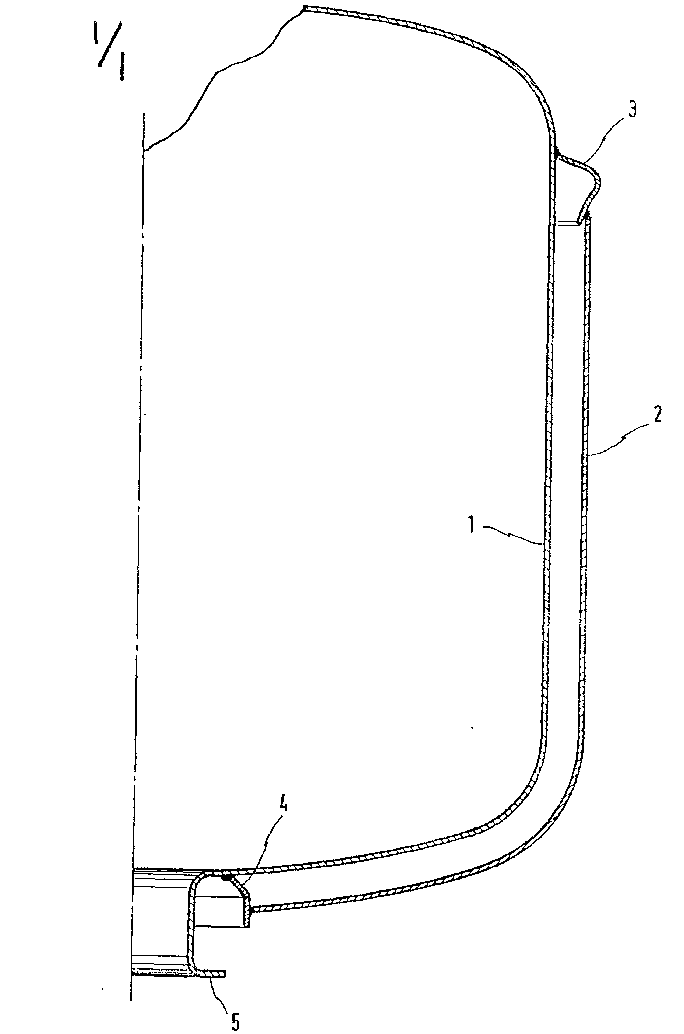

Anhand der Zeichnung soll die Erfindung beispielsweise näher erläutert werden. Die einzige Figur zeigt eine Schnittansicht durch einen emaillierten Doppelmantelbehälter mit einem Doppelmantel gemäss der Erfindung.

Der Behälter 1 ist auf seiner Innenseite mit einer hochkorrosionsbeständigen Emaillierung versehen und weist einen im Boden zentral angeordneten innen emaillierten Auslaufstutzen 5 auf. Wie bei bekannten Doppelmantelbehältern dieser Art wird vor dem Emaillieren ein oberer und ein unterer Mantelkragen an der Aussenwand des Behälters angeschweisst, damit daran nach dem Emaillieren der Doppelmantel 2 angeschweisst werden kann.

Gemäss der Erfindung ist der obere Mantelkragen 3 derart ausgebildet, dass er sich zu seinem unteren Ende hin konisch verjüngt. Bei dem dargestellten Ausführungsbeispiel ist ferner das untere Ende des unteren Mantelkragens 4 zylindrisch ausgebildet. Zum Anpassen kann deshalb das obere Ende des Doppelmantels 2 in eine geeignete Lage hochgeschoben werden, weil die Öffnung am unteren Ende des Doppelmantels 2 eine Verschiebung in eine beliebige Lage entlang dem zylindrisch ausgebildeten Ende des unteren Mantelkragens 4 ermöglicht. Danach wird das obere Ende des Doppelmantels 2 mit der Aussenseite des unteren Endes des oberen Mantelkragens 3 verschweisst. Deshalb ist unter Berücksichtigung der nach den Druckbehältervorschriften zulässigen Toleranzen bei dem Behälter, dem Mantelkragen und dem Doppelmantel, sowie unter Berücksichtigung von Verziehungen des Behälters und der Mantelkragen, die aufgrund der hohen Einbrenntemperaturen auftreten können, eine optimale Anpassung erfolgt. Der obere Mantelkragen dient gleichzeitig als Schweissbadsicherung, daher können alle Lagen der Schweissnaht zwischen Doppelmantel und oberen Mantelkragen nach den bekannten und geeigneten automatischen Schweissverfahren gelegt werden. Es sind deshalb weder aufwendige Anpassungsarbeiten noch eine manuelle Auftragung der Schweisswurzel erforderlich, so dass erhebliche Kosteneinsparungen bei der Herstellung erzielt werden können. Der obere und der untere Mantelkragen können in einfacher Weise durch Kaltwalzen hergestellt werden. Obwohl aufgrund der Form des oberen Mantelkragens etwas stärkere Spannungsbeanspruchungen im Vergleich zu bekannten Ausführungsformen von Mantelkragen dieser Art auftreten können, werden dadurch keine Schwierigkeiten verursacht, weil ohne weiteres eine etwas grössere Stärke des Mantelkragens vorgesehen werden kann.

Obwohl das beschriebene bevorzugte Ausführungsbeispiel einen Doppelmantelbehälter mit einem zentral angeordneten unteren Auslaufstutzen betrifft, ist die Erfindung auch auf andere Doppelmantelbehälter anwendbar, bei denen der Auslaufstutzen seitlich versetzt ist oder die keinen Auslaufstutzen aufweisen, weil auch in derartigen Fällen die Anpassungsarbeiten erheblich vereinfacht sind.

## Patentansprüche

1. Doppelmantel für einen emaillierten Behälter (1), insbesondere mit einem unteren Auslaufstutzen (5), bestehend aus einem oberen, entlang dem Aussenumfang des Behälters angeschweissten gewölbten Mantelkragen (3), gegebenenfalls einem unteren, den Auslaufstutzen umgebenden gewölbten Mantelkragen (4) sowie dem mit seinem oberen Ende mit dem unteren Ende des oberen Mantelkragens verschweissten Doppelmantel (2), dadurch gekennzeichnet, dass der obere Mantelkragen (3) zu seinem unteren Ende hin sich konisch verjüngend ausgebildet ist, und dass das obere Ende des Doppelmantels (2) mit der Aussenseite des unteren Endes des oberen Mantelkragens (3) verschweisst ist.

2. Doppelmantel für einen emaillierten Behälter nach Anspruch 1, dadurch gekennzeichnet, dass das untere Ende des den Auslaufstutzen (5) umgebenden Mantelkragens (4) zylindrisch ausgebildet ist, und dass die Öffnung am unteren Ende des Doppelmantels (2) im Bereich des zylindrisch ausgebildeten unteren Endes des unteren Mantelkragens (4) mit diesem verschweisst ist.

## Revendications

1. Enveloppe double destinée à un récipient émaille (1), en particulier comportant un raccord de décharge (5) inférieur et constitué par un collet d'enveloppe (3) supérieur bombé et soudé le long de la périphérie externe du récipient, éventuellement un collet d'enveloppe (4) inférieur bombé entourant le raccord de décharge, ainsi que l'enveloppe double (2) soudée par son extrémité supérieure à l'extrémité inférieure du collet supérieur d'enveloppe, caractérisée en ce que le collet supérieur d'enveloppe (3) est conformé de manière à rétrécir coniquement vers son extrémité inférieure et en ce que l'extrémité supérieure de l'enveloppe double (2) est soudée au côté externe de l'extrémité inférieure du collet supérieur d'enveloppe (3).

2. Enveloppe double destinée à un récipient émaillé selon la revendication 1, caractérisée en ce que l'extrémité inférieure du collet d'enveloppe (4) entourant le raccord de décharge (5) est conformée cylindriquement et en ce que l'orifice à l'extrémité inférieure de l'enveloppe double (2) est soudé avec le collet inférieur d'enveloppe (4) au voisinage de l'extrémité inférieure cylindrique de celui-ci.

## Claims

1. A double shell for an enamelled tank (2), in particular with a bottom outlet connection (5), consisting of an upper arched shell collar (3) welded on along the outer periphery of the tank, if required, a lower arched shell collar (4) surrounding the outlet connection (5), as well as the double shell (2) welded at its upper end to the lower end of the upper shell collar (3), characterised in that the upper shell collar (3) is designed to taper conically towards its bottom end, and that the upper end of the double shell (2) is welded to the outer side of the bottom end of the upper shell collar (3).

2. A double shell for an enamelled tank according to claim 1, characterised in that the bottom end of the shell collar (4) surrounding the outlet connection (5) is designed cylindrically, and that the opening at the bottom end of the double shell (2) is in the zone of the cylindrically designed bottom end of the lower shell collar (40) welded to the latter.

1/1